# EUROPEAN PATENT APPLICATION

(11) **EP 4 715 560 A1**
(43) Date of publication of application: **25.03.2026**
(21) Application number: 24838495.0
(22) Date of filing: 07.06.2024
(51) Int. Cl.: G06F 3/06

(54) **DATA ACCESS METHOD AND STORAGE DEVICE**

(30) Priority: 07.07.2023 CN 202310835543; 18.10.2023 CN 202311361220
(71) Applicant: Huawei Technologies Co., Ltd., Shenzhen, Guangdong 518129 (CN)
(72) Inventor: ZHANG, Xiaoyang, Shenzhen, Guangdong 518129 (CN); ZHANG, Zhenbo, Shenzhen, Guangdong 518129 (CN); LI, Zheng, Shenzhen, Guangdong 518129 (CN)
(74) Representative: Grünecker Patent- und Rechtsanwälte PartG mbB
(86) International application number: PCT/CN2024/098237
(87) International publication number: WO 2025/011237

(57) **Abstract**

A data access method and a storage device are provided. In the method, the storage device receives a write access request, where the write access request includes a first key and to-be-written first data; writes the first key and the first data into a memory of the storage device based on a first index structure; and records a correspondence between the first key and first metadata in an index file based on a second index structure, where the first metadata indicates a storage address of the first data in the memory or a disk of the storage device, the index file is stored in the memory of the storage device, and the index file is used for reading data stored in the memory or the disk. This method helps to provide an index solution with excellent read-write performance, so as to reduce overheads and a delay of data read access.

## Description

### CROSS-REFERENCE TO RELATED APPLICATIONS

This application claims priority to Chinese Patent Application No. 202310835543.4, filed with the China National Intellectual Property Administration on July 7, 2023 and entitled "DATA ACCESS METHOD", and to Chinese Patent Application No. 202311361220.2, filed with the China National Intellectual Property Administration on October 18, 2023 and entitled "DATA ACCESS METHOD AND STORAGE DEVICE", both of which are incorporated herein by reference in their entireties.

### TECHNICAL FIELD

This application relates to the field of computer technologies, and in particular, to a data access method and a storage device.

### BACKGROUND

With the rapid development of computer technologies, requirements for storage performance are increasingly high. Index information is a critical path of an input/output (input/output) flow in the storage field, and is critical to read-write performance of a storage product. A log-structured merge-tree (Log-Structured Merge-Tree, LSM-tree) is a basic algorithm of an index technology and is widely used by large companies and in open-source products.

However, a core of the LSM-tree is to give up a partial read capability in exchange for maximizing a write capability. As more data is written into a storage system, performing a read operation based on the LSM-tree requires a large quantity of disk read actions. This is time-consuming.

Therefore, how to construct an index solution with excellent read-write performance is still an important problem to be urgently resolved.

### SUMMARY

Embodiments of this application provide a data access method and a storage device, to provide an index solution with excellent read-write performance, so as to reduce overheads and a delay of data read access.

According to a first aspect, an embodiment of this application provides a data access method. The method may be performed by a storage device, and the storage device may be a memory that stores data by using an LSM-tree or a storage node in a storage system.

In the method, the storage device receives a write access request, where the write access request includes a first key and to-be-written first data; writes the first key and the first data into a memory of the storage device based on a first index structure; and records a correspondence between the first key and first metadata in an index file based on a second index structure, where the first metadata indicates a storage address of the first data in the memory or a disk of the storage device, the index file is stored in the memory of the storage device, and the index file is used for reading data stored in the memory or the disk.

According to the foregoing method, an LSM-tree-based write I/O path of the storage device is not changed, but a quick read path different from a conventional LSM-tree-based read I/O path is additionally constructed, so that when receiving a read access request, the storage device may quickly access the memory or the disk of the storage device based on the constructed quick read path, to quickly find target data that needs to be read. For example, the storage device receives the read access request, where the read access request includes the first key; queries, for the first metadata based on the first key, the index file stored in the memory; and reads the first data from the memory or the disk based on the first metadata.

In a possible implementation, if the first data is stored in the memory, the first metadata includes the storage address of the first data in the memory. In another possible implementation, if the first data is stored in the disk, the first metadata includes the storage address of the first data in the disk. In other words, the index file may be further correspondingly updated based on different write locations of the first data, to update, in the index file in a timely manner, the correspondence that is between the first key and the metadata and that corresponds to the first data, so as to ensure that the storage device can read correct data when processing the received read access request.

In a possible implementation, recording the correspondence between the first key and the first metadata in the index file based on the second index structure may include: when the first key and the first data are written into the memory, recording the correspondence between the first key and the first metadata in the index file based on the second index structure.

In a possible implementation, recording the correspondence between the first key and the first metadata in the index file based on the second index structure includes: when second data already stored in the memory is compacted and stored in the disk, recording the correspondence between the first key and the first metadata in the index file based on the second index structure, where the second data includes the first data, and the first metadata indicates that the storage address of the first data in the disk (for example, a level 0).

According to the foregoing method, in the LSM-tree-based storage device, when data in the memory is compacted and stored in the disk, because a storage address of the corresponding data changes, for example, a storage address in the memory changes to a storage address in the disk, correspondingly, new metadata of the data needs to be updated in the index file stored in the memory, where the new metadata indicates a new storage address of the data in the disk.

In a possible implementation, the disk uses tiered storage, and the method further includes: when third data already stored at an i^{th} level of the disk is compacted and stored to an (i+1)^{th} level of the disk, recording the correspondence between the first key and the first metadata in the index file based on the second index structure, where the third data includes the first data, the first metadata indicates a storage address of the first data at the (i+1)^{th} level, and i is an integer greater than or equal to 0.

According to the foregoing method, because the disk of the storage device uses a tiered storage structure, when data of an upper level satisfies a condition and needs to be compacted and stored in a lower level, a storage address of the data in the disk also changes, for example, a storage address in a level 0 is changed to a storage address in a level 1. Correspondingly, metadata of the data needs to be updated in the index file stored in the memory, where the metadata indicates a new storage address of the data in the disk.

In a possible implementation, the first index structure includes a log-structured merge LSM-tree structure. In a possible implementation, the second index structure includes any one of the following: a hash structure, a B+ tree structure, or a learned index structure. It should be understood that descriptions of the first index structure and the second index structure herein are merely examples rather than limitations. The data access method in this embodiment of this application is also applicable to another index solution in which excellent read-write performance needs to be implemented. Details are not described herein.

In a possible implementation, the storage device may be a storage device in any one of the following storage architectures: an all-flash storage architecture, a cloud storage architecture, or a distributed storage architecture. In other words, an architecture scenario to which the solution is applicable is not limited in embodiments of this application.

According to a second aspect, an embodiment of this application provides a storage device. The storage device may include: a transceiver unit, configured to receive a write access request, where the write access request includes a first key and to-be-written first data; and a processing unit, configured to write the first key and the first data into a memory of the storage device based on a first index structure; and record a correspondence between the first key and first metadata in an index file based on a second index structure, where the index file is stored in the memory of the storage device, and the index file is used for reading data stored in the memory or a disk.

In a possible implementation, the transceiver unit is further configured to receive a read access request, where the read access request includes the first key; and the processing unit is further configured to query the index file for the first metadata based on the first key; and read the first data from the memory or the disk based on the first metadata.

In a possible implementation, if the first data is stored in the memory, the first metadata includes a storage address of the first data in the memory.

In a possible implementation, the processing unit is configured to: when the first key and the first data are written into the memory, record the correspondence between the first key and the first metadata in the index file based on the second index structure.

In a possible implementation, if the first data is stored in the disk, the first metadata includes a storage address of the first data in the disk.

In a possible implementation, the processing unit is configured to: when second data already stored in the memory is compacted and stored in the disk, record the correspondence between the first key and the first metadata in the index file based on the second index structure, where the second data includes the first data, and the first metadata indicates the storage address of the first data in the disk.

In a possible implementation, the disk uses tiered storage, and the processing unit is further configured to: when third data already stored at an i^{th} level of the disk is compacted and stored to an (i+1)^{th} level of the disk, record the correspondence between the first key and first metadata in the index file based on the second index structure, where the third data includes the first data, the first metadata indicates a storage address of the first data at the (i+1)^{th} level, and i is an integer greater than or equal to 0.

In a possible implementation, the first index structure includes a log-structured merge LSM-tree structure.

In a possible implementation, the second index structure includes any one of the following: a hash structure, a B+ tree structure, or a learned index structure.

In a possible implementation, the storage device may be a storage device in any one of the following storage architectures: an all-flash storage architecture, a cloud storage architecture, or a distributed storage architecture.

According to a third aspect, this application further provides a storage device. The storage device includes a processor and a memory, and may further include a communication interface. The processor executes program instructions in the memory to perform the method provided in any one of the first aspect or the possible implementations of the first aspect. The storage device may be a storage device of different types in a storage system, for example, a centralized storage device, a distributed storage device, a cloud storage device, or an all-flash storage device. The storage is coupled to the processor, and stores program instructions and data that are necessary in a process of determining data processing (for example, stores a Bloom filter). The communication interface is configured to communicate with another device.

According to a fourth aspect, this application provides a storage system. The storage system includes at least one storage device. Each storage device includes a memory and a processor. The processor of the at least one storage device is configured to access code in the memory to perform the method according to any one of the first aspect or the possible implementations of the first aspect.

According to a fifth aspect, this application provides a computer-readable storage medium. When the computer-readable storage medium is executed by a computing device, the computing device performs the method provided in any one of the first aspect or the possible implementations of the first aspect. The storage medium stores a program. The storage medium includes but is not limited to a volatile memory, for example, a random access memory, or a nonvolatile memory, for example, a flash memory, a hard disk drive (hard disk drive, HDD), and a solid-state drive (solid-state drive, SSD).

According to a sixth aspect, this application provides a computing device program product. The computing device program product includes computer instructions. When the computer instructions are executed by a computing device, the computing device performs the method provided in any one of the first aspect or the possible implementations of the first aspect. The computer program product may be a software installation package. When the method provided in any one of the first aspect or the possible implementations of the first aspect needs to be used, the computer program product may be downloaded and executed on the computing device.

According to a seventh aspect, this application further provides a computer chip. The chip is connected to a storage. The chip is configured to read and execute a software program stored in the storage, to perform the method provided in any one of the first aspect and the possible implementations of the first aspect.

### BRIEF DESCRIPTION OF DRAWINGS

FIG. 1 is a diagram of a structure of an LSM-tree according to an embodiment of this application;
FIG. 2 is a diagram of a structure of another LSM-tree according to an embodiment of this application;
FIG. 3 is a schematic flowchart of a Bloom filter-based data access method according to an embodiment of this application;
FIG. 4A and FIG. 4B each are a diagram of a system architecture according to an embodiment of this application;
FIG. 5 is a schematic flowchart of a data access method according to an embodiment of this application;
FIG. 6 is a diagram of a structure of an LSM-tree according to an embodiment of this application;
FIG. 7 is a schematic flowchart of a data access method according to an embodiment of this application;
FIG. 8 is a diagram of a structure of an LSM-tree according to an embodiment of this application;
FIG. 9 is a schematic flowchart of a data access method according to an embodiment of this application; and
FIG. 10 is a diagram of a structure of a storage device according to an embodiment of this application.

### DESCRIPTION OF EMBODIMENTS

Before a data access method provided in embodiments of this application is described, concepts included in embodiments of this application are first described:

### 1. Sorted string table (sorted string table, SSTable):

The SSTable is a persistent, ordered, and immutable key value (key value, KV) storage structure. In embodiments of this application, data in the SSTable is data stored in the SSTable. The SSTable includes a series of blocks (block) with a configurable size. Each block is used for storing a key and a value, and the block is logical space of a storage device, for example, a LUN. An index (index) of each block is stored at the end of the SSTable. When a processor in the storage device opens an SSTable, indexes stored in the SSTable are loaded into a memory of the storage device. Then, the processor searches the indexes loaded into the memory based on a specified key, to determine an index of a block in which the key is located, determines, based on the index of the block in which the key is located, a location that is of the block in which the key is located and that is in a disk, and then reads, from the disk, data (for example, a value) in the block in which the key is located.

### 2. Log-structured merge-tree (log-structured merge-tree, LSM-Tree):

The LSM-tree is a hierarchical, ordered, and disk-oriented data storage structure. The LSM-tree provides a sequential data write mode, capable of effectively improving data write efficiency.

The LSM-tree is a data storage structure that spans a memory and a disk of a storage device.

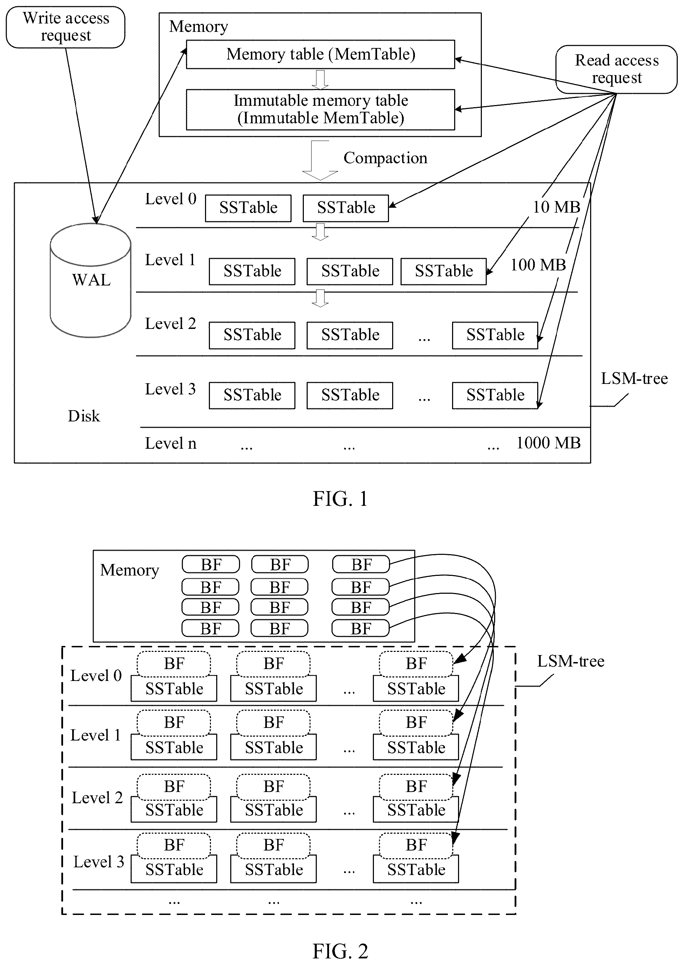

As shown in FIG. 1, a memory table (MemTable) is a data structure of the LSM-tree in the memory, and is only used for storing latest data, and organizing the data in order based on a key (key). Because data in the memory may be lost due to a power failure, reliability of a data operation is generally ensured by maintaining write ahead logging (Write Ahead Logging, WAL) in the disk.

In the disk, the LSM-tree is a multi-level structure, for example, may include a level (level) 0, a level 1, a level 2, a level 3, ..., and a level n, where n is an integer greater than or equal to 1. Storage space may vary between different levels. For example, storage space of the level 0 is 10 MB, storage space of the level 1 is 100 MB, and storage space of the level n is 1000 MB. Each level may include a plurality of SSTables. FIG. 1 shows an example in which only some levels in the LSM-tree are drawn. When the LSM-tree is applied to different storage systems, a quantity of levels of the LSM-tree may be set based on an actual requirement.

When a processor of the storage device performs a write operation (for example, insertion (or referred to as addition)), for the LSM-tree, the write operation may be first performed on both the MemTable and the WAL. When an amount of data in the MemTable reaches a preset threshold, the MemTable is automatically converted into an immutable memory table (Immutable MemTable) and flushed (flush) to the disk, forming a level 0 SStable.

Insertion in the LSM-tree is simple. Data simply needs to be inserted into the memory table, and whether the data already exists in the memory or the disk is not concerned. The immutable MemTable is an intermediate state during conversion of the MemTable into an SSTable in the disk. During the conversion, the write operation is processed by using a new MemTable, and a data update operation is not blocked. Only data in the memory can be updated in place. Only append write, not an in-place update, is allowed for a change on data in the disk. When the immutable MemTable is flushed to the disk, compaction (compaction) is also performed on the immutable MemTable and previous data in order. During the compaction, original data is not modified, instead, data is directly inserted, to avoid random write. After data in the memory table is flushed to the disk, a backup of the data is deleted from the WAL correspondingly.

Similarly, after amounts of data of a plurality of SSTables of the level 0 reach a preset threshold, compaction is also performed, and a compaction result is written into an SSTable of a next level (that is, the level 1). When amounts of data of a plurality of SSTables of the level 1 reach a preset threshold, compaction is also performed, and a compaction result is written into an SSTable of a next level (that is, the level 2), and so on, until data is written into the level n.

Different levels of the LSM-tree have different SSTables, and an upper level indicates newer data. Therefore, when performing a read operation, the storage device needs to search level by level. As shown in FIG. 1, data in the memory is first searched for, including searching in the MemTable and the immutable MemTable. If the data cannot be found in the memory, searching proceeds down according to a level sequence of the LSM-tree, and an SSTable at each level of the LSM-tree is queried in sequence until to-be-read data is found.

As write operations are continuously performed on the SSTable, more SSTables need to be opened when the processor performs a read operation, and more data change (update and deletion) operations are accumulated for a same key. Because the SSTable is immutable, to reduce a quantity of files and clear invalid data in a timely manner, a compaction operation is required to compact SSTables with overlapping key ranges. Because most data is located in a bottom-level table, a search operation is performed to search a plurality of tables at a plurality of levels, and a large quantity of disk read operations are required. This causes high resource overheads and is time-consuming.

It should be noted that a type of data in the SSTable is not limited in embodiments of this application, and the data may be the data, or may be metadata of the data. In other words, the SSTable stores data in a form of a key-value pair, where the key is a key allocated to the data and is used for uniquely identify the data, and the value may be the data or the metadata of the data.

### 3. Bloom filter (bloom filter, BF):

The Bloom filter is a binary vector and a series of random mapping functions, and may be used for retrieving whether an element is in a set. Currently, in some designs, as shown in FIG. 2, the Bloom filter may be configured for an SSTable at each level of the LSM-tree, to determine whether to-be-read data is stored in each SSTable at the level. Each SSTable may correspond to one Bloom filter. Certainly, in some scenarios, Bloom filters at levels of the LSM-tree may alternatively be flexibly provided. For example, a plurality of SSTables may correspond to one Bloom filter. A quantity of SSTables corresponding to the Bloom filter is not limited in embodiments of this application.

Based on the constructed Bloom filter, when a KV is searched for, each Bloom filter is searched in sequence, and the Bloom filter determines whether a to-be-queried key is in an SSTable managed by the current Bloom filter. If a to-be-queried key is in an SSTable managed by the current Bloom filter, target data is directly read from the SSTable. Otherwise, a Bloom filter of a next SSTable is searched until target data is read.

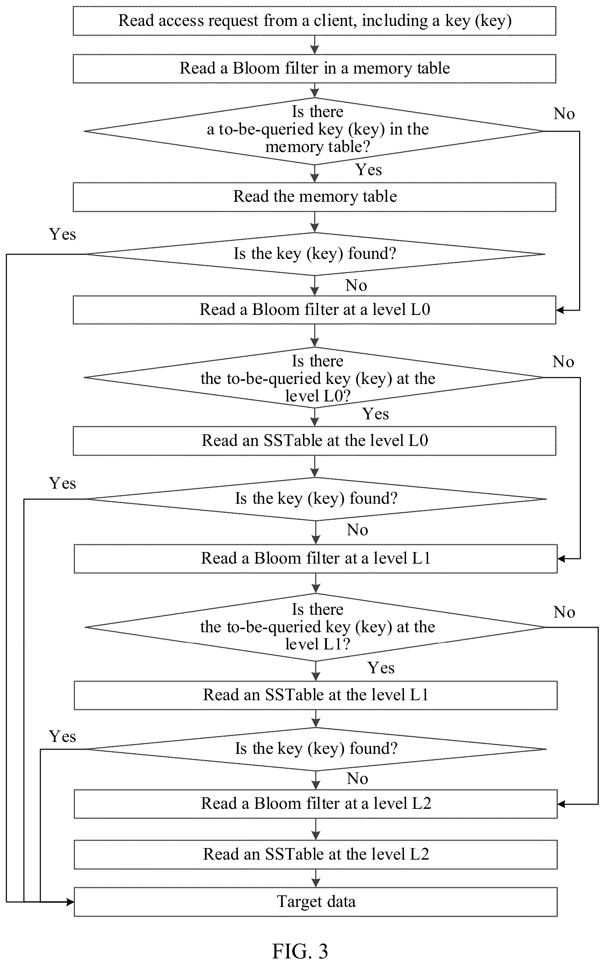

In a flowchart shown in FIG. 3, a three-level LSM-tree structure (including a level 0, a level 1, and a level 2, which are alternatively represented as L0, L1, and L2 respectively) is used as an example, where a plurality of SSTables at each level correspond to one Bloom filter. When receiving a read access request from a client device, a processor of a storage device first searches a Bloom filter in a memory table based on a key carried in the read access request. If the Bloom filter determines that the key exists in the memory table, the processor reads target data from the corresponding memory table. If the Bloom filter determines that the key does not exist in the memory table, a Bloom filter of an SSTable of a next level L0 is searched. If the Bloom filter determines that the to-be-queried key exists in an SSTable of L0, the processor reads target data from the corresponding SSTable. If the Bloom filter determines that the to-be-queried key does not exist in L0, a Bloom filter of an SSTable of a next level L1 is searched. If the Bloom filter determines that the to-be-queried key exists in L1, the processor reads target data from a corresponding SSTable. If the Bloom filter determines that the to-be-queried key does not exist in L1, a Bloom filter of an SSTable of a next level L2 is searched.

In the foregoing process, the Bloom filter can filter out an SSTable that does not include the target data, to search an SSTable that may include the target data, instead of reading each SSTable. This helps reduce a large amount of read access overheads.

However, the Bloom filter has a specific misjudgment rate. During misjudgment, if the Bloom filter determines that the target data exists in a table but actually does not exist, a disk read operation is caused. If there is no misjudgment, a disk needs to be read only once, and an SSTable in which the target data is located is directly read to find the corresponding data. However, due to existence of misjudgment, and because there are a large quantity of SSTables of an LSM-tree in actual application, even though the Bloom filter is used for filtering, a plurality of tables still need to be searched, resulting in poor performance. For example, if the misjudgment rate of the Bloom filter is 5%, for an LSM-tree including 100 SSTables, a disk needs to be read five times. If the misjudgment rate is higher or there are more SSTables, the disk needs to be read more times.

It can be learned that even though the Bloom filter is introduced into the LSM-tree, read-write performance cannot be optimized.

In view of this, embodiments of this application provide a data access method and a storage device, to provide an index solution with excellent read-write performance, so as to reduce overheads and a delay of data read access. The method and the device are based on same technical concept. Because problem resolving principles of the method and the device are similar, for implementation of the device and the method, refer to each other. Repeated parts are not described again. In addition, in embodiments of this application, unless otherwise stated or there is a logic conflict, terms and/or descriptions in embodiments are consistent and may be mutually referenced, and technical features in different embodiments may be combined into a new embodiment based on an internal logical relationship thereof.

It should be noted that, in embodiments of this application, "at least one" means one or more, and "a plurality of" means two or more. "And/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

Unless otherwise specified, ordinal numbers such as "first" and "second" mentioned in embodiments of this application are used to distinguish between a plurality of objects, but are not used to limit priorities or importance degrees of the plurality of objects. For example, a first index file and a second index file are merely used to distinguish between different index files, but are not used to indicate a difference in priority, importance, or the like between the two index files.

The following describes a data access solution in embodiments of this application in detail with reference to the accompanying drawings and embodiments.

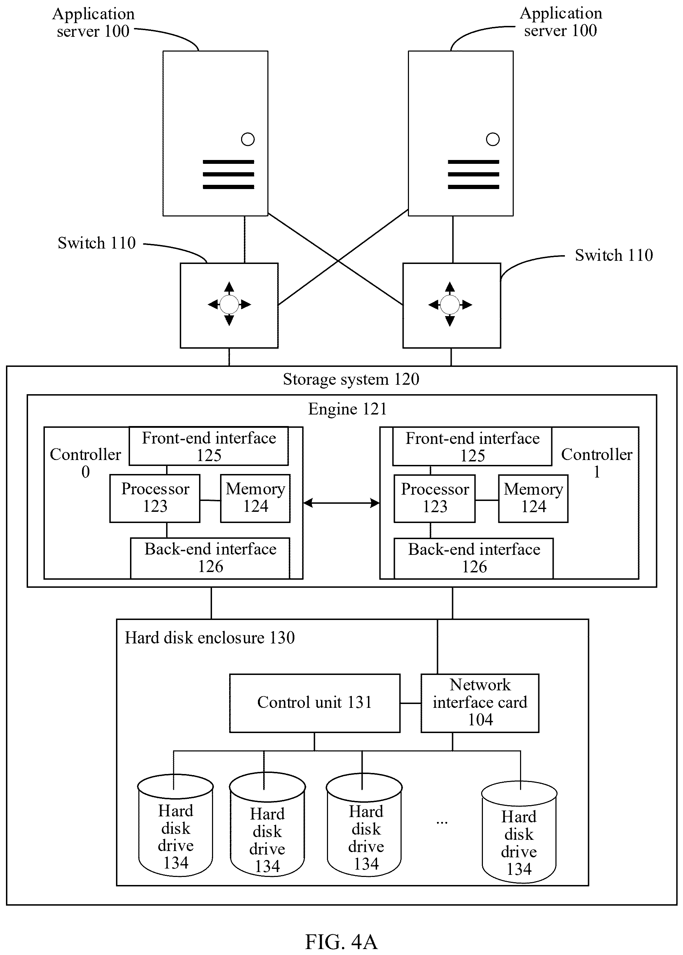

FIG. 4A is a diagram of a system architecture according to an embodiment of this application. The system architecture may include an application server 100, a switch 110, and a storage system 120.

A user accesses data by using applications. A computer that runs these applications is referred to as an "application server". The application server 100 may be a physical machine or a virtual machine. A physical application server includes but is not limited to a desktop computer, a server, a notebook computer, and a mobile device. The application server accesses the storage system through the fiber channel switch 110 to access data. However, the switch 110 is only an optional device, and the application server 100 may also directly communicate with the storage system 120 through a network.

The storage system 120 shown in FIG. 4A is a centralized storage system. The centralized storage system features a unified portal, and all data from an external device passes through this portal. The portal is an engine 121 of the centralized storage system. The engine 121 is a core component of the centralized storage system, and many advanced functions of the storage system are implemented in the engine 121.

As shown in FIG. 4A, the engine 121 includes one or more controllers. FIG. 4A is described by using an example in which the engine includes two controllers. A mirror channel exists between the controller 0 and the controller 1, so that the two controllers can back up each other. The engine 121 further includes a front-end interface 125 and a back-end interface 126. The front-end interface 125 is configured to communicate with the application server 100, to provide a storage service for the application server 100. The back-end interface 126 is configured to communicate with a hard disk drive 134 (an example of a disk), to expand a capacity of the storage system. The engine 121 is connected to more hard disk drives 134 through the back-end interface 126, to form a large storage resource pool.

In terms of hardware, as shown in FIG. 4A, the controller 0 includes at least a processor 123 and a memory 124. The processor 123 is a central processing unit (central processing unit, CPU), and is configured to process a data access request from outside the storage system (a server or another storage system), and process a request generated inside the storage system. For example, when the processor 123 receives, through the front-end interface 125, a data write request sent by the application server 100, the processor 123 may preferentially store data in the memory 124, for example, store the data in an SSTable in the memory 124. When an amount of data of a part of or all SSTables in the memory 124 reaches a specific threshold, the processor 123 sends, through the back-end port, the data stored in the memory 124 to the hard disk drive 134 for persistent storage. In embodiments of this application, storage space including a plurality of hard disk drives 134 may be constructed in a form of an LSM-tree. The processor 123 may perform a data access method provided in embodiments of this application, to provide an index solution with excellent read-write performance, so as to reduce overheads and a delay of data read access.

The memory 124 is an internal storage that directly exchanges data with the processor. The memory 124 includes at least two types of storages. For example, the memory 124 may be a random access memory or a read-only memory (read-only memory, ROM). For example, the random access memory is a dynamic random access memory (dynamic random access memory, DRAM) or a storage class memory (storage class memory, SCM). The memory may further include another random access memory, for example, a static random access memory (static random access memory, SRAM). A specific type of the memory 124 is not limited in this application. Any storage that can be used as the memory 124 to perform exchange with the processor is applicable to embodiments of this application. The memory 124 stores a software program, and the processor 123 may run the software program in the memory 124 to manage the hard disk drive.

Hardware components and software structures of the controller 1 (and other controllers that are not shown in FIG. 4A) are similar to those of the controller 0. Details are not described herein again.

FIG. 4A shows a centralized storage system with disk and controller separation. In the system, the engine 121 may not have a hard disk slot, the hard disk drive 134 needs to be placed in a hard disk enclosure 130, and the back-end interface 126 communicates with the hard disk enclosure 130. The back-end interface 126 exists in the engine 121 in a form of an adapter card. One engine 121 may simultaneously use two or more back-end interfaces 126 to connect to a plurality of hard disk enclosures 130. Alternatively, the adapter card may be integrated on a mainboard. In this case, the adapter card may communicate with the processor 123 through a PCIE bus. Optionally, the storage system 120 may alternatively be a storage system with disk and controller integration. The engine 121 has a hard disk slot, and the hard disk drive 134 may be directly deployed in the engine 121. In other words, the hard disk drive 134 and the engine 121 are deployed on a same device.

The hard disk enclosure 130 includes a control unit 131, a network interface card 104, and several hard disk drives 134. The control unit 131 may perform address translation and a data read/write operation. The network interface card 104 is configured to communicate with the engine 121.

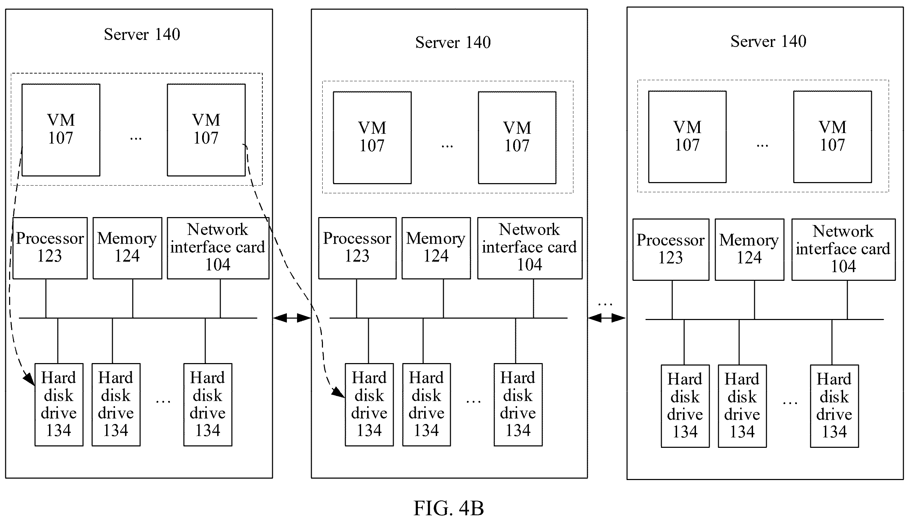

The data access method provided in embodiments of this application is also applicable to a distributed storage system in addition to the centralized storage system. FIG. 4B is a diagram of a system architecture of a distributed storage system according to an embodiment of this application. The distributed storage system includes a server cluster. The server cluster includes one or more servers 140 (FIG. 4B shows three servers 140, but this is not limited to two servers 140), and the servers 140 may communicate with each other. A virtual machine 107 may be created on the server 140, a required computing resource is from a local processor 123 and a local memory 124 of the server 140, and various applications may run in the virtual machine 107.

The server 110 may perform the data access method provided in embodiments of this application. In terms of hardware, as shown in FIG. 4B, the server 110 includes at least a processor 123, a memory 124, a network interface card 104, and a hard disk drive 134. The processor 123, the memory 124, the network interface card 104, and the hard disk drive 134 are connected to each other through a bus. For functions and specific types of the processor 123, the memory 124, the network interface card 104, and the hard disk drive 134, refer to related descriptions in FIG. 4A. Details are not described herein again.

The system architectures shown in FIG. 4A and FIG. 4B are merely examples. A structure of the system is not limited in this application. All storage systems constructed based on the LSM-tree are applicable to embodiments of this application. For example, the storage system may alternatively be an all-flash storage system, a cloud storage system, or the like.

The following describes the data access method provided in embodiments of this application by using an example in which the storage system 120 in FIG. 4A or the server shown in FIG. 4B is used as a storage device. It should be understood that the storage device may alternatively be any LSM-tree-based storage device in another type of storage system, for example, an all-flash storage device or a cloud storage device. This is not limited in embodiments of this application.

The storage device may include a memory, a processor, and a disk. Optionally, the storage device may further include another component. For details, refer to the foregoing related descriptions with reference to FIG. 4A and FIG. 4B. Details are not described herein again.

The memory of the storage device stores an index file. The index file may be obtained by using the second index structure, and is used for reading data stored in the memory or the disk of the storage device. For example, a first index structure may include the LSM-tree described above, and the second index structure may include but is not limited to any one of the following: a hash structure, a B+ tree structure, or a learned index structure. Optionally, the first index structure may alternatively be implemented as another optimized index structure with good write performance, and the second index structure may alternatively be implemented as another optimized index structure with good read performance. This is not limited in embodiments of this application.

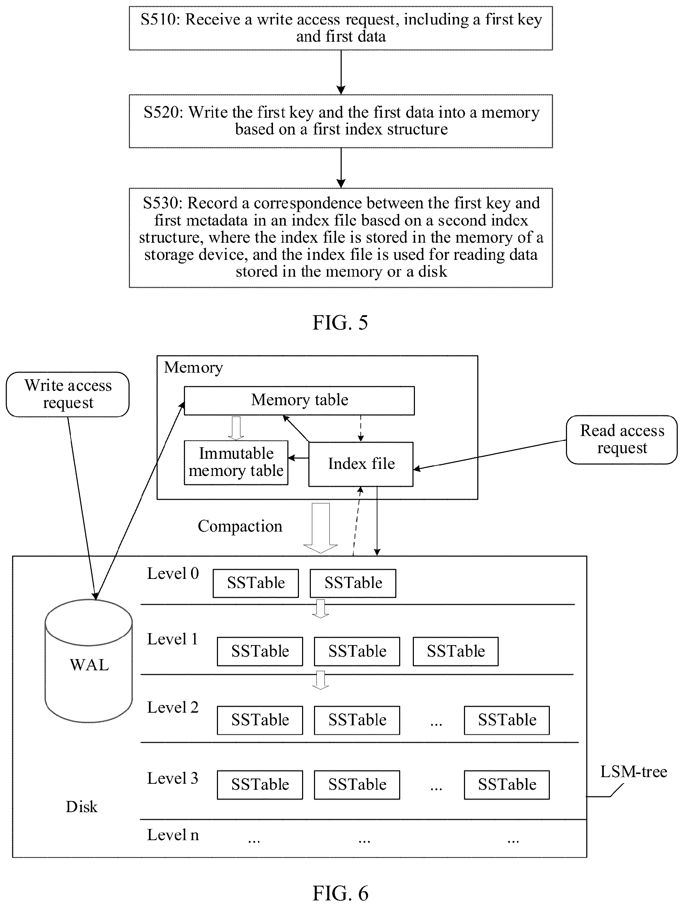

As shown in FIG. 5, the data access method may include the following steps.

S510: A storage device receives a write access request.

For example, if the storage device is the storage system shown in FIG. 4A, the write access request may be from the application server shown in FIG. 4A. Alternatively, if the storage device is the server shown in FIG. 4B, the write access request may be from a client device associated with the server shown in FIG. 4B. A type of an architecture to which the storage device belongs and a source of the write access request are not limited in embodiments of this application.

In a possible implementation, the write access request includes to-be-written first data and a first key associated with the first data. For ease of distinguishing, in the following descriptions, the first key may be represented as key1, and the first data is represented as Value 1. key1 is a key allocated to the first data, and is used for uniquely identifying the first data.

S520: The storage device writes the first key and the first data into a memory based on a first index structure.

In this embodiment of this application, an example in which the first index structure is implemented as the LSM-tree described above is used. When S520 is implemented, the storage device may write the first key and the first data into a MemTable in the memory based on the first index structure.

For each received write access request, the storage device implements S520 by using a same method, to ensure optimization of write performance of the storage device based on the LSM-tree.

Optionally, because data in the memory will be lost due to a power failure, before S520 is implemented, the storage device may further write the first key and the first data into WAL. The WAL may be used for performing fault (for example, power outage) recovery processing on lost data in the memory.

To implement an index solution with optimized read-write performance, an implementation is as follows: An LSM-tree-based write I/O path of the storage device is not changed, but a quick read path different from a conventional LSM-tree-based read I/O path is additionally constructed, so that when receiving a read access request, the storage device may quickly access the memory or a disk of the storage device based on the constructed quick read path, to quickly find target data that needs to be read. In this embodiment of this application, an index file constructed based on a second index structure is stored in the memory of the storage device, to implement the quick read path.

S530: The storage device records a correspondence between the first key and first metadata in the index file based on the second index structure.

In this embodiment of this application, the index file is stored in the memory of the storage device, and the index file is used for reading data stored in the memory or the disk. The first metadata is metadata (Metadata) of the first data, and indicates a storage address of the first data in the memory or the disk of the storage device. For ease of distinguishing, in the following descriptions, the first metadata may be represented as M1.

In this embodiment of this application, the index file is constructed by using the second index structure different from the first index structure. For example, the first index structure may include the LSM-tree described above, and the second index structure may include but is not limited to any one of the following: a hash structure, a B+ tree structure, or a learned index structure. For ease of distinguishing, in the following descriptions, it is assumed that the second index structure is a hash structure, and correspondingly, generated metadata is a hash value.

As shown in FIG. 6, the index file may record a correspondence between a key corresponding to data stored in the memory and metadata of the data, or may record a correspondence between a key corresponding to data stored in the disk and metadata of the data, for example, a relationship between key1 and M1. If the first data is stored in the memory, the first metadata M1 recorded in the index file indicates the storage address of the first data in the memory. If the first data is stored in the disk, the first metadata M1 recorded in the index file indicates the storage address of the first data in the disk.

In FIG. 6, a dashed line arrow pointing from a memory table to the index file indicates that the correspondence between the key corresponding to the data stored in the memory and the metadata is recorded in the index file, and a dashed line arrow pointing from the disk to the index file indicates that the correspondence between the key corresponding to the data stored in the disk and the metadata is further recorded in the index file. The following describes implementation details of S530 with reference to different examples, and details are not described herein.

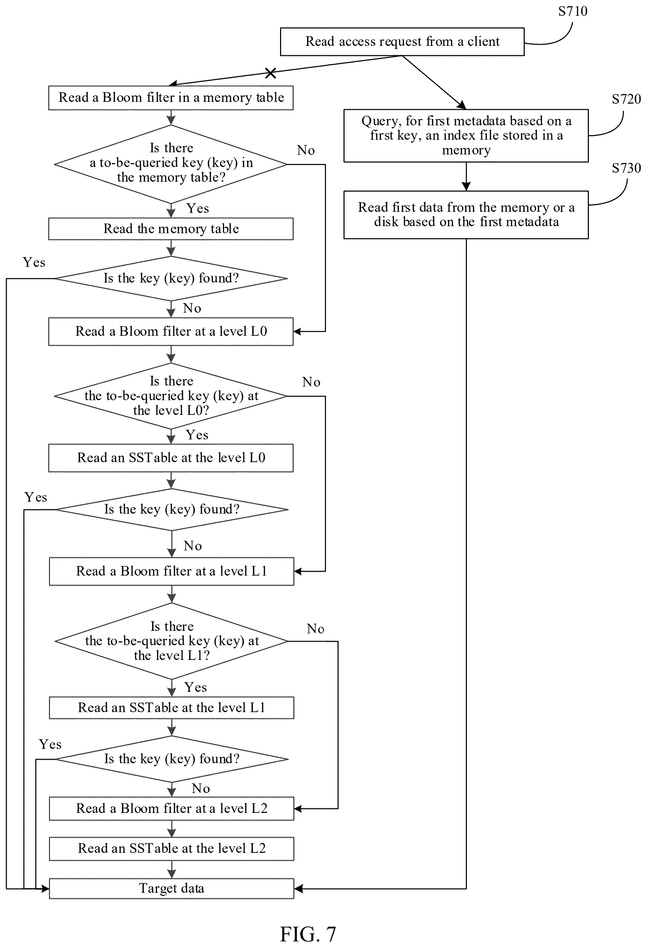

The storage device may further receive a read access request, and process the read access request based on an index file. As shown in FIG. 7, the method may include the following steps.

S710: The storage device receives a read access request from a client.

Similar to the source of the write access request, if the storage device is the storage system shown in FIG. 4A, the read access request may be from the application server shown in FIG. 4A. Alternatively, if the storage device is the server shown in FIG. 4B, the read access request may be from a client device associated with the server shown in FIG. 4B. A type of an architecture to which the storage device belongs and a source of the read access request are not limited in this embodiment of this application.

In a possible implementation, the read access request includes a key corresponding to to-be-read data. For ease of understanding, an example in which the read access request includes a first key is used herein for subsequent description.

Refer to FIG. 7. The storage device no longer processes the read access request according to a left branch procedure, but implements the following steps according to a right branch procedure.

S720: The storage device queries, for first metadata based on the first key, an index file stored in a memory.

S730: The storage device reads the first data, that is, target data, from the memory or a disk based on the first metadata.

In other words, if the first metadata indicates a storage address of the first data in the memory, the storage device may read the first data from the memory. If the first metadata indicates a storage address of the first data in the disk, the storage device may read the first data from the disk.

For example, the read access request received by the storage device includes the first key key1 described above. The storage device queries the index file based on key1. If M1 corresponding to key1 is found in the index file, and a storage address indicated by M1 is a storage address in the memory, the storage device reads, based on the storage address, the first data corresponding to key1 in the memory table or an immutable memory table in the memory. If M1 corresponding to key1 is found in the index file, and a storage address indicated by M1 is a storage address in the disk, the storage device reads, based on the storage address, the first data corresponding to key1 in an SSTable of a corresponding level in the disk.

It can be learned from S710 to S730 that, when the storage device processes the read access request based on the index file, in comparison with a conventional LSM-tree-based read I/O path, there is no need to query a plurality of SSTables of the LSM-tree level by level, so that times of disk read can be greatly reduced, and overall read performance of the storage device can be improved, to obtain the index solution with excellent read-write performance. In addition, in comparison with a Bloom filter-based data access solution, this solution does not have a problem of misjudgment, and does not have I/O overheads caused by the misjudgment. In this solution, write performance of an LSM-tree-based architecture is not affected, and read performance is also optimized for the architecture, to provide the index solution with excellent read-write performance.

For ease of understanding, the following describes implementation details of S530 with reference to an example in which correspondences between metadata and keys of all data stored in the memory and the disk are recorded in the index file.

Manner 1: When writing the first key and the first data into the memory in a synchronous write manner, the storage device records the correspondence between the first key and the first metadata in the index file based on the second index structure, where the first metadata indicates the storage address of the first data in the memory.

In this manner, when performing a write operation by using an LSM-tree-based algorithm, the storage device writes the first key and the first data into the memory based on an LSM-tree-based first index structure. Synchronously, the storage device may further generate, based on a preset second index structure and a corresponding algorithm, the first metadata for the first key and the first data stored in the memory, where the first metadata indicates the storage address of the first data in the memory. The storage device records the correspondence between a first index and the first metadata in the index file.

For example, the second index structure is a hash structure. During implementation, when the storage device can write the first key and the first data into the memory, the storage device calculates, by using a hash function, a hash value corresponding to the first key. The hash value is the first metadata, and indicates the storage address of the first data in the memory.

Manner 2: The storage device records the correspondence between the first key and the first metadata in the index file in an asynchronous write manner when a compaction operation occurs.

It can be learned from the foregoing descriptions about FIG. 1 that, a compaction operation related to the LSM-tree-based architecture may include a compaction operation from the memory to a level 0 of the disk, or may include a compaction operation from an i^{th} level to an (i+1)^{th} level in the disk, where i is an integer greater than or equal to 0. Therefore, in embodiments of this application, regardless of whether the data is compacted and stored from the memory to the level 0 of the disk, or the data is compacted and stored from the i^{th} level to the (i+1)^{th} level in the disk, correspondences between keys of data and metadata corresponding to the data need to be recorded in the index file provided that a storage address of the data changes and the metadata corresponding to the data changes.

In an example of a change of the storage address of the first data caused by a compaction operation, the change may include the following examples.

Example 1: The first data is changed from being stored in the memory to being stored in the disk.

In this example, because an amount of data already stored in the memory reaches a preset threshold, the storage device may compact and store second data already stored in the memory to the level 0 of the disk, and a storage address of the second data is changed from the memory to the disk. The second data includes the first data. Therefore, the storage address of the first data is also changed from in the memory to the disk.

When performing a compaction operation in Example 1, a processor of the storage device may compact and store the second data to a corresponding SSTable of the level 0 based on the LSM-tree-based first index structure, and record an index of the second data at the end of the SSTable.

In addition, the processor of the storage device may generate second metadata of the second data based on a preset second index structure. The second metadata indicates a storage address of the second data at the level 0 of the disk. The storage device may record a correspondence between a key of the second data and binary data in the index file stored in the memory. Because the second data includes the first data, the second metadata includes the first metadata, and the first metadata indicates a storage address of the first data at the level 0 of the disk.

Example 2: The first data is changed from being stored at the i^{th} level of the disk to being stored at the (i+1)^{th} level of the disk, where i is an integer greater than or equal to 0.

In this example, because an amount of data already stored at the i^{th} level reaches a preset threshold, a processor of the storage device may control the disk to compact and store third data already stored at the i^{th} level to the (i+1)^{th} level of the disk, and a storage address of the third data is changed from the i^{th} level of the disk to the (i+1)^{th} level of the disk. The third data may include the first data. Therefore, the storage address of the first data is also changed from the i^{th} level of the disk to the (i+1)^{th} level of the disk.

In Example 2, when performing a compaction operation, the processor of the storage device may compact and store the third data to a corresponding SSTable of the (i+1)^{th} level based on the LSM-tree-based first index structure, and record an index of the second data at the end of the SSTable.

In addition, the processor of the storage device may generate third metadata of the third data based on a preset second index structure. The third metadata indicates the storage address of the third data at the (i+1)^{th} level of the disk. The storage device may record a correspondence between a key of the third data and the third metadata in the index file stored in the memory. Because the third data includes the first data, the third metadata includes the first metadata, and the first metadata indicates the storage address of the first data at the (i+1)^{th} level of the disk.

Therefore, based on the foregoing different manners and examples, a process of maintaining information recorded in the index file when the storage device writes the first data into the memory and the first data is stored in the memory and stored downward level by level in the disk is described.

In specific implementation, due to a content capacity limitation of the storage device, there is a possibility that the memory is insufficient to store correspondences between keys of all data stored in the disk and metadata that is of the data and that is generated by using the second index structure. For this case, in a possible implementation, a correspondence between a key of partial data in the disk and metadata is recorded in the index file stored in the memory. For example, priorities may be divided for SSTables of different levels of the disk, so that second index structure-based metadata generated for data stored in an SSTable with a higher priority is preferentially recorded in the index file stored in the memory, and second index structure-based metadata generated for data stored in an SSTable with a lower priority is stored in an index file separately maintained at a corresponding level. The index file is also obtained by using the second index structure.

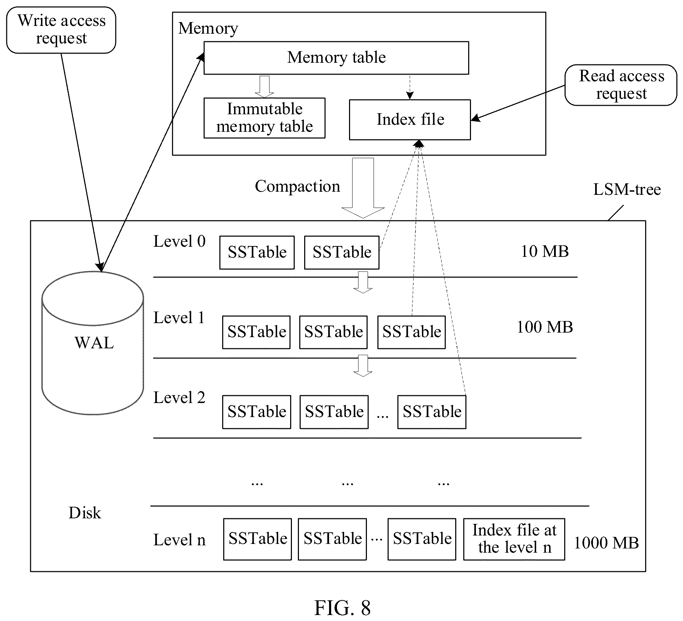

In an example, as shown in FIG. 8, priorities of SSTables of different levels may be configured based on storage space of different levels of the LSM-tree. For example, because a large amount of data in the disk is stored at a level n, and a memory table and a level 0 to a level n-1 store small amounts of data, priorities of the memory table and the level 0 to the level n-1 may be configured to be higher than a priority of the level n.

When data is written into the memory table, based on the content described in the foregoing Manner 1, a correspondence between a key of the data stored in the memory and metadata that is of the data and that is generated by using the second index structure is recorded in the index file stored in the memory. Details are not described herein again.

When data is written into SSTables of the level 0 to the level n-1, based on the content described in the foregoing Manner 2, when data in the memory is compacted and stored to the level 0, or data at the i^{th} level is compacted and stored to the (i+1)^{th} level (where i is an integer greater than or equal to 0), a correspondence between a key of compacted data and metadata of the compacted data is recorded in the index file stored in the memory. The metadata is constructed by using the second index structure described above. Details are not described herein again.

When data at the level n-1 is compacted and stored at the level n, a correspondence between a key of compacted data and metadata of the compacted data is no longer recorded in the index file stored in the memory, but is recorded in an index file at the level n.

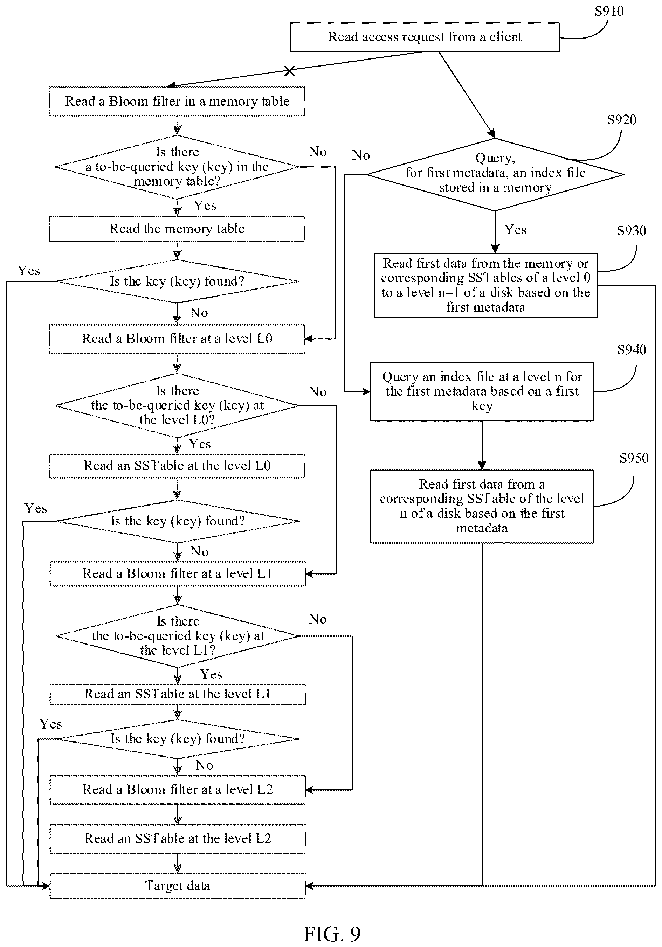

Further, after receiving the read access request, as shown in FIG. 9, the storage device may process the read access request according to the following steps.

S910: The storage device receives the read access request from a client.

Similar to the source of the write access request, if the storage device is the storage system shown in FIG. 4A, the read access request may be from the application server shown in FIG. 4A. Alternatively, if the storage device is the server shown in FIG. 4B, the read access request may be from a client device associated with the server shown in FIG. 4B. A type of an architecture to which the storage device belongs and a source of the read access request are not limited in this embodiment of this application.

In a possible implementation, the read access request includes a key corresponding to to-be-read data. For ease of understanding, an example in which the read access request includes a first key is used herein for subsequent description.

Refer to FIG. 9. The storage device no longer processes the read access request according to a left branch procedure, but implements the following steps according to a right branch procedure.

S920: The storage device queries, for first metadata based on the first key, an index file stored in a memory. If the first metadata is found, S930 is performed. If the first metadata is not found, S940 is performed.

S930: The storage device reads first data, that is, target data, from a memory table or corresponding SSTables of a level 0 to a level n-1 of a disk based on the first metadata.

S940: The storage device queries an index file at the level n for the first metadata based on the first key.

S950: The storage device reads the first data, that is, the target data, from a corresponding SSTable of the level n of the disk based on the first metadata.

It can be learned from S910 to S930 that, even though correspondences between keys of all data in the disk and metadata are not maintained in the index file in the memory, when processing the read access request, the storage device queries the index file stored in the memory and the index file at the level n for corresponding metadata and reads target data. In comparison with a conventional LSM-tree-based read I/O path, there is no need to query a plurality of SSTables of the LSM-tree level by level, so that times of disk read can be greatly reduced, and overall read performance of the storage device can be improved, to obtain the index solution with excellent read-write performance. In addition, in comparison with a Bloom filter-based data access solution, this solution does not have a problem of misjudgment, and does not have I/O overheads caused by the misjudgment. In this solution, write performance of an LSM-tree-based architecture is not affected, and read performance is also optimized for the architecture, to provide the index solution with excellent read-write performance.

It should be understood that the foregoing description with reference to FIG. 8 to FIG. 9 is merely an example rather than any limitation. In another embodiment, content of a correspondence that is between an index and metadata and that needs to be stored in a second index file in the memory may be further configured based on a service requirement or an architecture requirement. This is not limited in embodiments of this application.

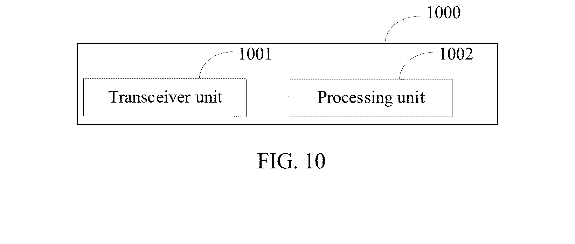

Based on a same inventive concept as the method embodiment, an embodiment of this application further provides a storage device. The storage device is configured to perform the method performed by the storage device in the foregoing method embodiment. As shown in FIG. 10, a storage device 1000 may include: a transceiver unit 1001, configured to receive a write access request, where the write access request includes a first key and to-be-written first data; and a processing unit 1002, configured to write the first key and the first data into a memory of the storage device based on a first index structure; and record a correspondence between the first key and first metadata in an index file based on a second index structure, where the index file is stored in the memory of the storage device, and the index file is used for reading data stored in the memory or a disk.

In a possible implementation, the transceiver unit 1001 may be further configured to receive a read access request, where the read access request includes the first key; and the processing unit 1002 is further configured to query the index file for the first metadata based on the first key; and read the first data from the memory or the disk based on the first metadata. For detailed implementation details, refer to the method steps in FIG. 7 and FIG. 9.

In a possible implementation, if the first data is stored in the memory, the first metadata includes a storage address of the first data in the memory.

In a possible implementation, the processing unit 1002 may be configured to: when the first key and the first data are written into the memory, record the correspondence between the first key and the first metadata in the index file based on the second index structure. For detailed implementation details, refer to the method steps in FIG. 7 and FIG. 9.

In a possible implementation, if the first data is stored in the disk, the first metadata includes a storage address of the first data in the disk.

In a possible implementation, the processing unit 1002 may be configured to: when second data already stored in the memory is compacted and stored in the disk, record the correspondence between the first key and the first metadata in the index file based on the second index structure, where the second data includes the first data, and the first metadata indicates the storage address of the first data in the disk.

In a possible implementation, the disk uses tiered storage, and the processing unit 1002 may be further configured to: when third data already stored in an i^{th} level of the disk is compacted and stored in an (i+1)^{th} level of the disk, record the correspondence between the first key and first metadata in the index file based on the second index structure, where the third data includes the first data, and the first metadata indicates a storage address of the first data at the (i+1)^{th} level.

In a possible implementation, the first index structure includes a log-structured merge LSM-tree structure.

In a possible implementation, the second index structure includes any one of the following: a hash structure, a B+ tree structure, or a learned index structure.

Division into modules in this embodiment of this application is an example, is only logical function division, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

If the integrated module is implemented in a form of a software functional module and is sold or used as an independent product, the integrated module may be stored in a computer-readable storage medium. Based on such an understanding, the technical solutions of this application essentially, or the part contributing to the conventional technology, or all or a part of the technical solutions may be embodied in a form of a software product. The computer software product is stored in a storage medium, and includes several instructions for instructing a terminal device (which may be a personal computer, a mobile phone, a network device, or the like) or a processor (processor) to perform all or some steps of the method in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The descriptions of procedures corresponding to the foregoing accompanying drawings have respective focuses. For a part of a procedure that is not described in detail, refer to related descriptions of another procedure.

All or some of the foregoing embodiments may be implemented by using software, hardware, firmware, or any combination thereof. When software is used to implement the embodiments, all or a part of the embodiments may be implemented in a form of a computer program product. The computer program product includes computer program instructions. When the computer program instructions are loaded and executed on a computer, all or some of the processes or functions shown in FIG. 5, FIG. 7, or FIG. 9 according to embodiments of the present invention are generated.

The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), or a semiconductor medium (for example, an SSD).

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A data access method, applied to a storage device, wherein the method comprises:
receiving a write access request, wherein the write access request comprises a first key and to-be-written first data;
writing the first key and the first data into a memory of the storage device based on a first index structure; and
recording a correspondence between the first key and first metadata in an index file based on a second index structure, wherein the first metadata indicates a storage address of the first data in the memory or a disk of the storage device, the index file is stored in the memory of the storage device, and the index file is used for reading data stored in the memory or the disk.

2. The method according to claim 1, wherein the method further comprises:
receiving a read access request, wherein the read access request comprises the first key;
querying the index file for the first metadata based on the first key; and
reading the first data from the memory or the disk based on the first metadata.

3. The method according to claim 1 or 2, wherein if the first data is stored in the memory, the first metadata comprises the storage address of the first data in the memory.

4. The method according to claim 3, wherein recording the correspondence between the first key and the first metadata in the index file based on the second index structure comprises:
when the first key and the first data are written into the memory, recording the correspondence between the first key and the first metadata in the index file based on the second index structure.

5. The method according to claim 1 or 2, wherein if the first data is stored in the disk, the first metadata comprises the storage address of the first data in the disk.

6. The method according to claim 5, wherein recording the correspondence between the first key and the first metadata in the index file based on the second index structure comprises:
when second data already stored in the memory is compacted and stored in the disk, recording the correspondence between the first key and the first metadata in the index file based on the second index structure, wherein the second data comprises the first data, and the first metadata indicates the storage address of the first data in the disk.

7. The method according to claim 5, wherein the disk uses tiered storage, and the method further comprises:
when third data already stored at an i^{th} level of the disk is compacted and stored to an (i+1)^{th} level of the disk, recording the correspondence between the first key and the first metadata in the index file based on the second index structure, wherein the third data comprises the first data, and the first metadata indicates a storage address of the first data at the (i+1)^{th} level.

8. The method according to any one of claims 1 to 7, wherein the first index structure comprises a log-structured merge LSM-tree structure.

9. The method according to any one of claims 1 to 8, wherein the second index structure comprises any one of the following:
a hash structure, a B+ tree structure, or a learned index structure.

10. A storage device, wherein the storage device comprises:
a transceiver unit, configured to receive a write access request, wherein the write access request comprises a first key and to-be-written first data; and
a processing unit, configured to write the first key and the first data into a memory of the storage device based on a first index structure; and record a correspondence between the first key and first metadata in an index file based on the second index structure, wherein the first metadata indicates a storage address of the first data in the memory or a disk of the storage device, the index file is stored in the memory of the storage device, and the index file is used for reading data stored in the memory or the disk.

11. The storage device according to claim 10, wherein
the transceiver unit is further configured to receive a read access request, wherein the read access request comprises the first key; and
the processing unit is further configured to query the index file for the first metadata based on the first key; and read the first data from the memory or the disk based on the first metadata.

12. The storage device according to claim 10 or 11, wherein if the first data is stored in the memory, the first metadata comprises the storage address of the first data in the memory.

13. The storage device according to claim 12, wherein the processing unit is configured to:
when the first key and the first data are written into the memory, record the correspondence between the first key and the first metadata in the index file based on the second index structure.

14. The storage device according to claim 10 or 11, wherein if the first data is stored in the disk, the first metadata comprises the storage address of the first data in the disk.

15. The storage device according to claim 14, wherein the processing unit is configured to:
when second data already stored in the memory is compacted and stored in the disk, record the correspondence between the first key and the first metadata in the index file based on the second index structure, wherein the second data comprises the first data, and the first metadata indicates the storage address of the first data in the disk.

16. The storage device according to claim 14, wherein the disk uses tiered storage, and the processing unit is further configured to:
when third data already stored at an i^{th} level of the disk is compacted and stored to an (i+1)^{th} level of the disk, record the correspondence between the first key and the first metadata in the index file based on the second index structure, wherein the third data comprises the first data, and the first metadata indicates a storage address of the first data at the (i+1)^{th} level.

17. The storage device according to any one of claims 10 to 16, wherein the first index structure comprises a log-structured merge LSM-tree structure.

18. The storage device according to any one of claims 10 to 17, wherein the second index structure comprises any one of the following:
a hash structure, a B+ tree structure, or a learned index structure.

19. A storage device, wherein the storage device comprises a processor and a memory;
the memory is configured to store computer program instructions; and
the processor invokes the computer program instructions in the memory, to perform the method according to any one of claims 1 to 9.

20. A computer-readable storage medium, wherein when the computer-readable storage medium is executed by a computing device, the computing device performs the method according to any one of claims 1 to 9.
